# EUROPÄISCHE PATENTSCHRIFT

(11) **EP 1 901 315 B1**
(45) Veröffentlichungstag und Bekanntmachung des Hinweises auf die Patenterteilung: **12.09.2018**
(21) Anmeldenummer: 07112620.5
(22) Anmeldetag: 17.07.2007
(51) Int. Cl.: H01F 7/18

(54) **Einchiplösung für eine Ventil-Endstufe mit Sicherheitsschalter**
One chip solution for a valve output stage with safety switch
Puce intégrée pour un étage de sortie de vanne à commutateur de sécurité

(30) Priorität: 11.09.2006 DE 102006042599
(43) Veröffentlichungstag der Anmeldung: 19.03.2008
(73) Patentinhaber: ROBERT BOSCH GMBH, 70442 Stuttgart (DE)
(72) Erfinder: Schmid, Roland, 72116, Moessingen (DE); Tschentscher, Harald, 71723, Grossbottwar (DE); Koerner, Gotthilf, 71287, Weissach (DE); Rupp, Andreas, 74613, Oehringen (DE); Sautter, Peter, 74348, Lauffen (DE); Gebauer, Carsten, 71034, Boeblingen (DE); Breitmaier, Axel, 72119, Ammerbuch-Entringen (DE)

(56) Entgegenhaltungen:
- WO-A1-2005/036285
- DE-A1- 19 611 522
- US-A- 5 713 643
- US-A- 5 793 093

## Beschreibung

### Stand der Technik

Die Erfindung betrifft eine Schaltanordnung für wenigstens eine elektrische Einrichtung, insbesondere ein stromgesteuertes Ventil gemäß dem Oberbegriff des Patentanspruchs 1, sowie ein Ventil mit einer solchen Schaltanordnung gemäß Patentanspruchs 10.

Stromgesteuerte Ventile, wie sie beispielsweise in Bremskreisen von Kraftfahrzeugen verbaut werden, umfassen eine Spule zum Erzeugen eines magnetischen Feldes, mittels dessen ein Anker betätigt wird. Die Höhe des Stromflusses bestimmt dabei die Stärke des magnetischen Feldes und damit die Stellung des Ventils (Auf, Zu oder Zwischenstellung). Zum Einstellen der Stromstärke umfassen bekannte Ventile eine so genannte Ventil-Endstufe mit einem Schalter (Transistor), der von einer Treiber-Elektronik nach Wunsch angesteuert wird. Die Ansteuerung des Endstufen-Schalters erfolgt meist per PWM-Signal (PWM: Pulsweitenmodulation), wobei das Tastverhältnis des PWM-Signals die Höhe des Spulenstroms bestimmt.

Die Spule ist in der Regel über einen Hauptschalter mit einer Spannungsversorgung verbunden. Der Hauptschalter ist im Normalbetrieb dauerhaft eingeschaltet. Bei einem Fehler am Ventile oder der zugehörigen Ventil-Endstufe wird der Schalter ausgeschaltet, um eine falsche Ansteuerung des Ventils in jedem Fall zu verhindern. Der Hauptschalter dient daher im Wesentlichen als Sicherheitsschalter.

Haupt- und Endstufen-Schalter werden jeweils von einer separaten Treiber-Elektronik angesteuert, die üblicherweise auf unterschiedlichen ICs implementiert sind. Auf diese Weise können bestimmte Sicherheitsvorschriften erreicht werden, die z.B. in der ISO 61508 vorgegeben sind. Durch die zwei ICs entstehen aber relativ hohe Kosten, und sie benötigen relativ viel Bauraum. Die Ansteuer-Schaltungen des Haupt- und Endstufen-Schalters könnten grundsätzlich zwar auch auf einem einzigen IC implementiert werden, in diesem Fall würden jedoch nicht die erwünschten Sicherheitskriterien der ISO 61508 erreicht werden, da Effekte auftreten können, die beide Schaltkreise beeinflussen, so dass es zu einer fehlerhaften Ansteuerung von Hauptschalter und Endstufenschalter kommen kann.

### Offenbarung der Erfindung

Es ist daher die Aufgabe der vorliegenden Erfindung, insbesondere Bauraum und Kosten einer Schalteinrichtung, insbesondere einer Ventil-Endstufe, mit einem ersten Schalter und einem zusätzlichen Hauptschalter zu reduzieren und die Anforderungen an die Sicherheit zu erfüllen.

Gelöst wird diese Aufgabe gemäß der Erfindung durch die im Patenanspruch 1 sowie im Patentanspruch 10 angegebenen Merkmale. Weitere Ausgestaltungen der Erfindung sind Gegenstand von Unteransprüchen.

Ein wesentlicher Aspekt der Erfindung besteht darin, die Treiber-Schaltungen des ersten Schalters und des Hauptschalters auf dem selben IC zu implementieren, jedoch einen Teil der gesamten Treiber-Schaltung auf wenigstens einer separaten IC-Fläche anzuordnen, die durch einen Kanal von der restlichen Schaltung getrennt ist. Die separaten Teile der Treiber-Schaltung sind dabei so angeordnet, dass keinerlei Leitungen, ausgenommen gegebenenfalls einer Masseleitung, über den Kanal verlaufen. Folglich sind die parasitären Störungen zwischen den einzelnen Schaltkreisen minimiert, so dass die genannten Normen eingehalten werden können. Die Schalteinrichtung kann dadurch sehr kompakt und kostengünstig unter Einhaltung der genannten EMV- und Sicherheits-Normen hergestellt werden.

Der auf der separaten IC-Fläche implementierte Teil der Treiber-Schaltung umfasst vorzugsweise eine Abschaltlogik für den Hauptschalter (Not-Aus-Logik). Gerade dieser Schaltungsteil ist wegen seiner Sicherheitsrelevanz besonders kritisch und muss daher besonders gut geschützt werden.

Der Kanal zwischen den Schaltungsteilen ist vorzugsweise wenigstens 30 µm, insbesondere wenigstens 50 µm breit, bzw. so breit, wie es die gültige Sicherheitsnorm vorschreibt. Dadurch können parasitäre Effekte möglichst gering gehalten werden.

Eine weitere Maßnahme zur Einhaltung der genannten Normen besteht darin, den Hauptschalter mit zwei separaten Steuerleitungen, genauer einer Steuerleitung und einer Abschaltleitung auszustatten. Gemäß der Erfindung ist der Hauptschalter über die Steuerleitung mit einem ersten Teil und über die Abschaltleitung mit einem auf der separaten Fläche angeordneten zweiten Teil der Treiber-Schaltung, insbesondere der Abschaltlogik, verbunden. Im Normalbetrieb (es liegt kein Fehler vor) wird der Hauptschalter über die Steuerleitung angesteuert. Bei Erkennen eines Fehlers wird der Hauptschalter dagegen von der Abschaltlogik über die Abschaltleitung ausgeschaltet. Um ein sicheres Abschalten des Hauptschalters zu gewährleisten, umfasst die Steuerleitung einen Vorwiderstand, während in der Abschaltleitung nur ein kleinerer bzw. kein Vorwiderstand vorgesehen ist. Dadurch kann der Hauptschalter in jedem Fall sicher abgeschaltet werden.

Die separaten Teile der Treiber-Elektronik haben vorzugsweise separate Masseanschlüsse. Dadurch können Störeffekte bzw. Fehler, die beide Schaltungsteile betreffen, weiter minimiert werden.

Die separaten Teile der Treiber-Elektronik haben vorzugsweise jeweils eine eigene elektrische Versorgung. Dies dient ebenfalls zur Verringerung von Störeffekten bzw. Fehlern, die beide Schaltungsteile betreffen.

Der auf der separaten IC-Fläche angeordnete Teil der Treiber-Elektronik verarbeitet vorzugsweise ein so genanntes Watchdog-Signal (bzw. ein anderes Fehlersignal), das von einer Prozessoreinheit, wie beispielsweise einem Rechner, zugeführt wird. Das Watchdog-Signal ist dabei ein Signal das auf einen Fehler am Ventil bzw. der Ventil-Endstufe hinweisen kann. Wenn z.B. die Frequenz des Watchdog-Signals zu stark von einer vorgegebenen Soll-Frequenz abweicht oder das Watchdog-Signal nicht in einem vorgegebenen Zeitfenster liegt, wird ein Fehler erkannt und der Hauptschalter ausgeschaltet.

In der Watchdog-Signalleitung ist vorzugsweise ein Vorwiderstand vorgesehen, der zum Schutz der separaten Treiber-Elektronik dient.

Die Versorgungsleitung der auf der separaten IC-Fläche angeordneten Treiber-Elektronik umfasst vorzugsweise ebenfalls einen Vorwiderstand zum Absichern der Schaltung.

Auf dem IC der Ventilendstufe ist neben der Treiber-Schaltung vorzugsweise auch wenigstens ein Endstufen-Schalter selbst implementiert.

Wahlweise kann die vorstehend beschriebene Einchip-Struktur neben Ventilen natürlich auch für andere elektrische Einrichtungen verwendet werden.

### Kurze Beschreibung der Zeichnungen

Die Erfindung wird nachstehend anhand der beigefügten Zeichnungen beispielhaft näher erläutert. Es zeigen:

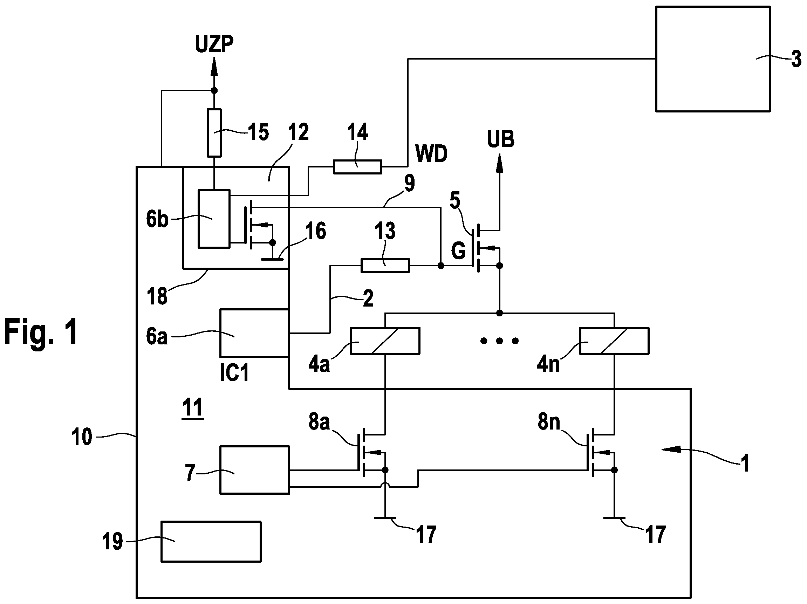

- Fig. 1: ein schematisches Blockschaltbild einer Ventil-Endstufe gemäß einer Ausführungsform der Erfindung.

### Ausführungsformen der Erfindung

Fig. 1 zeigt ein schematisches Schaltbild einer Ventil-Endstufe 1 für stromgesteuerte Ventile 4a-4n, wie sie beispielsweise in Kfz-Bremsanlagen verbaut werden. Von den elektromagnetischen Ventilen sind dabei nur die zugehörigen Spulen 4a-4n dargestellt. Die parallel geschalteten Spulen 4a-4n sind über einen gemeinsamen Hauptschalter 5 mit einer Versorgungsspannung UB verbunden.

Der Hauptschalter 5 ist im Normalbetrieb dauerhaft eingeschaltet und kann bei einem Fehler an einem der Ventile 4a-4n oder der Ventil-Endstufe 1 ausgeschaltet werden, um eine falsche Ansteuerung der Ventile 4a-4n zu verhindern. Der Hauptschalter 5 dient daher im Wesentlichen als Sicherheitsschalter. Im Normalbetrieb wird der Hauptschalter 5 von einer Treiber-Elektronik 6a angesteuert, und bei Erkennen eines Fehlers von einer Abschalt-Elektronik 6b ausgeschaltet. Treiber-Elektronik 6a und Abschalt-Elektronik 6b sind aus Gründen der Störfestigkeit auf separaten IC-Flächen 11,12 eines ICs 10 angeordnet, die durch einen Kanal 18 voneinander getrennt sind.

Jedem der Ventile 4a-4n ist ein Endstufen-Schalter 8a-8n zugeordnet, der von einer zughörigen Treiber-Elektronik 7 angesteuert wird, um den durch das zugehörige Ventil 4a-4n fließenden Strom I zu steuern oder zu regeln. Die Endstufen-Schalter 8a-8n sind hier integrierter Bestandteil des Endstufen-ICs 10 und versorgungsseitig jeweils mit der zugehörigen Spule 4a-4n verbunden. Der Hauptschalter 5 und die Endstufen-Schalter 8a-8n sind seriell verschaltet.

Die Ansteuerung der Endstufen-Schalter 8a-8n erfolgt vorzugsweise mittels eines PWM-Signals (PWM: Pulsweitenmodulation), dessen Tastverhältnis den Stromfluss I durch die zugehörige Spule 4a-4n und damit die Stellung des zugehörigen Ventils bestimmt. Der Spulenstrom kann dabei je nach Ausführung des ICs 10 gesteuert oder geregelt werden. Im Falle einer Regelung umfasst der IC 10 vorzugsweise einen Stromregler 19. Die Ansteuerung der Endstufen-Schalter 8a-8n kann auch rein geschaltet erfolgen.

Wie vorstehend erwähnt, ist ein Teil 6b der gesamten Treiber-Elektronik 6a, 6b, 7 auf einem separaten Flächenbereich 12 des ICs 10 angeordnet, der durch einen Kanal 18 von der restlichen Schaltung getrennt ist. Der Kanal 18 hat eine Breite von wenigstens 30 µm, bevorzugt etwa 50 µm und dient im Wesentlichen dazu, die beiden Treiber-Schaltungen 6,7 physisch voneinander zu trennen, um Störungen zu minimieren, die auf beide Schaltungsteile wirken und dazu führen, dass die Endstufenschalter und der Hauptschalter fehlerhaft angesteuert werden. Über den Kanal 18 verlaufen daher auch keinerlei Leitungsbahnen. Lediglich die Masseleitung kann den Kanal 18 kreuzen.

Der Hauptschalter 5 ist über zwei separate Steuerleitungen, genauer eine Steuerleitung 2 und eine Abschaltleitung 9 mit dem IC 10 verbunden. Im Normalbetrieb werden der Hauptschalter 5, ebenso wie die Endstufen-Schalter 8a-8n von dem auf der Fläche 11 angeordneten Teil 6a,7 der Treiber-Elektronik angesteuert und abgeschaltet. Bei Erkennen eines Fehlers wird der Hauptschalter dagegen zusätzlich von der Abschalt-Elektronik 6b über die Abschaltleitung 9 ausgeschaltet. Das betrifft insbesondere Fehler, die dazu führen, dass weder der Hauptschalter 5 noch die Endstufenschalter 8a-8n abgeschaltet werden können.

Um sicherzustellen, dass der Hauptschalter 5 bei einem Fehler über den Abschaltpfad 9 abgeschaltet werden kann, ist im Ansteuerpfad 2 ein Vorwiderstand 13 vorgesehen, der größer ist als der Widerstand des Abschaltpfades 9. Dadurch kann der Hauptschalter in jedem Fall sicher abgeschaltet werden.

Zum Erkennen eines Fehlers liest die Abschalt-Elektronik 6b ein Taktsignal WD (Watchdog-Signal) ein, das von einer Rechnereinheit 3 zugeführt wird. Das Watchdog-Signal ist im Wesentlichen ein Taktsignal, das dazu genutzt wird, die Funktion des Rechners 3 zu überwachen, der wiederum die Ventile 4a-4n bzw. die Ventil-Endstufe 1 überwacht. Wenn das Watchdog-Signal WD ausbleibt oder nicht in einem vorgegebenen Zeitfenster liegt, wird ein Fehlerzustand erkannt und der Hauptschalter 5 über den Abschaltpfad 9 ausgeschaltet. Dadurch kann eine fehlerhafte Ansteuerung der Ventile 4a-4n in jedem Fall verhindert werden.

Im Signalpfad des Watchdog-Signals ist ein Vorwiderstand 14 angeordnet, der die Abschaltelektronik 2 gegen Überspannungen absichert.

Zum Schutz der Abschalt-Elektronik 2 ist außerdem in der Versorgungsleitung der Abschalt-Elektronik 2 ein Vorwiderstand 15 vorgesehen.

Die verschiedenen genannten Maßnahmen zum Verbessern der Störfestigkeit und der Sicherheit der Schaltanordnung können auch auf andere Anwendungen übertragen werden.

## Patentansprüche

1. Schaltanordnung für wenigstens eine elektrische Einrichtung (4a-4n), insbesondere ein stromgesteuertes Ventil, umfassend einen Schalter (8a-8n) zum Steuern oder Regeln des durch die elektrische Einrichtung (4a-4n) fließenden Stroms (I) einen Hauptschalter (5) zum Ein- bzw. Ausschalten der elektrischen Einrichtung (4a-4n) und eine Treiber-Elektronik (6a,6b,7) zum Ansteuern des Schalters (8a-8n) und des Hauptschalters (5), wobei die Treiber-Elektronik (7) des Schalters (8a-8n) und diejenige (6a,6b) des Hauptschalters (5) auf dem selben IC (10) implementiert sind, wobei ein Teil der gesamten Treiber-Elektronik (6a,6b,7) auf wenigstens einer separaten IC-Fläche (12) angeordnet ist, die durch einen Kanal (18) von der restlichen Schaltung getrennt ist **dadurch gekennzeichnet, dass** der Hauptschalter (5) zwei Steuerleitungen (2,9) aufweist, über die er wahlweise angesteuert werden kann, wobei eine der Steuerleitungen (2,9) mit einem ersten Teil (6a) und die andere Steuerleitung (2,9) mit dem separaten zweiten Teil (6b) der Treiber-Elektronik (6a,6b,7) verbunden ist, und dass die Steuerleitung (2), über die der Hauptschalter (5) im Normalbetrieb angesteuert wird, einen Vorwiderstand (13) umfasst.

2. Schaltanordnung nach Anspruch 1, **dadurch gekennzeichnet, dass** der auf der separaten IC-Fläche (12) implementierte Teil (6b) der Treiber-Elektronik (6a,6b,7) eine Abschaltlogik für den Hauptschalter (5) umfasst.

3. Schaltanordnung nach Anspruch 1, oder 2 **dadurch gekennzeichnet, dass** der Kanal (18) mindestens 30 µm, vorzugsweise wenigstens 50 µm breit ist.

4. Schaltanordnung nach einem der vorhergehenden Ansprüche, **dadurch gekennzeichnet, dass** die auf separaten IC-Flächen (11, 12) angeordneten Teile (6a, 7) der Treiber-Elektronik (6a, 6b, 7) separate Masseanschlüsse (16, 17) haben.

5. Schaltanordnung nach einem der vorhergehenden Ansprüche, **dadurch gekennzeichnet, dass** die auf separaten IC-Flächen (11, 12) angeordneten Teile (6a, 7) der Treiber-Elektronik (6a,6b,7) eine separate elektrische Versorgung haben.

6. Schaltanordnung nach Anspruch 2, **dadurch gekennzeichnet, dass** die Abschaltlogik (6b) des Hauptschalters (5) ein Watchdog-Signal (WD) verarbeitet, das von einer Prozessoreinheit (3) zugeführt wird.

7. Schaltanordnung nach Anspruch 6, **dadurch gekennzeichnet, dass** das Watchdog-Signal (WD) über einen Vorwiderstand (14) zugeführt wird.

8. Schaltanordnung nach Anspruch 2, **dadurch gekennzeichnet, dass** in der Versorgungsleitung der Abschaltlogik (6b) ein Vorwiderstand (15) vorgesehen ist.

9. Schaltanordnung nach einem der vorhergehenden Ansprüche, **dadurch gekennzeichnet, dass** keine Leitungen über den Kanal (18) führen, ausgenommen gegebenenfalls einer Masseleitung.

10. Ventil, insbesondere stromgesteuertes Ventil (4a-4n), mit einer Schaltanordnung gemäß einem der vorhergehenden Ansprüche

## Claims

1. Switching arrangement for at least one electrical device (4a-4n), in particular a current-controlled valve, comprising a switch (8a-8n) for controlling or regulating the current (I) flowing through the electrical device (4a-4n), a main switch (5) for switching the electrical device (4a-4n) on and off and a driver electronics system (6a, 6b, 7) for actuating the switch (8a-8n) and the main switch (5), wherein the driver electronics system (7) of the switch (8a-8n) and that (6a, 6b) of the main switch (5) are implemented on the same IC (10), wherein a part of the entire driver electronics system (6a, 6b, 7) is arranged on at least one separate IC area (12), which is isolated from the rest of the circuit by a channel (18), **characterized in that** the main switch (5) has two control lines (2, 9), by means of which said main switch can be actuated selectively, wherein one of the control lines (2, 9) is connected to a first part (6a) and the other control line (2, 9) is connected to the separate second part (6b) of the driver electronics system (6a, 6b, 7), and **in that** the control line (2), by means of which the main switch (5) is actuated in normal operation, comprises a series resistor (13).

2. Switching arrangement according to Claim 1, **characterized in that** the part (6b) of the driver electronics system (6a, 6b, 7) that is implemented on the separate IC area (12) comprises switch-off logic for the main switch (5).

3. Switching arrangement according to Claim 1 or 2, **characterized in that** the channel (18) has a width of at least 30 µm, preferably at least 50 µm.

4. Switching arrangement according to one of the preceding claims, **characterized in that** the parts (6a, 7) of the driver electronics system (6a, 6b, 7) that are arranged on separate IC areas (11, 12) have separate earth connections (16, 17).

5. Switching arrangement according to one of the preceding claims, **characterized in that** the parts (6a, 7) of the driver electronics system (6a, 6b, 7) that are arranged on separate IC areas (11, 12) have a separate electrical power supply.

6. Switching arrangement according to Claim 2, **characterized in that** the switch-off logic (6b) of the main switch (5) processes a watchdog signal (WD), which is supplied by a processor unit (3).

7. Switching arrangement according to Claim 6, **characterized in that** the watchdog signal (WD) is supplied via a series resistor (14).

8. Switching arrangement according to Claim 2, **characterized in that** a series resistor (15) is provided in the supply line of the switch-off logic (6b).

9. Switching arrangement according to one of the preceding claims, **characterized in that** no lines conduct via the channel (18), except for an earth line, where necessary.

10. Valve, in particular current-controlled valve (4a-4n), having a switching arrangement according to one of the preceding claims.

## Revendications

1. Arrangement de circuit pour au moins un dispositif électrique (4a-4n), notamment une vanne commandée en courant, comprenant un commutateur (8a-8n) destiné à commander ou à réguler le courant (I) qui circule à travers le dispositif électrique (4a-4n), un commutateur principal (5) destiné à mettre en circuit ou hors circuit le dispositif électrique (4a-4n) et une électronique de circuit d'attaque (6a, 6b, 7) destiné à exciter le commutateur (8a-8n) et le commutateur principal (5), l'électronique de circuit d'attaque (7) du commutateur (8a-8n) et celle (6a, 6b) du commutateur principal (5) étant mises en oeuvre sur le même circuit intégré (10), une partie de l'électronique de circuit d'attaque (6a, 6b, 7) complète étant disposée sur au moins une surface de CI (12) séparée, laquelle est séparée du reste du circuit par un canal (18), **caractérisé en ce que** le commutateur principal (5) possède deux lignes de commande (2, 9) par le biais desquelles il peut être excité au choix, l'une des lignes de commande (2, 9) étant reliée à une première partie (6a) et l'autre ligne de commande (2, 9) à la deuxième partie (6b) séparée de l'électronique de circuit d'attaque (6a, 6b, 7), et **en ce que** la ligne de commande (2) par le biais de laquelle le commutateur principal (5) est excité en fonctionnement normal comporte une résistance série (13).

2. Arrangement de circuit selon la revendication 1, **caractérisé en ce que** la partie (6b) de l'électronique de circuit d'attaque (6a, 6b, 7) qui est mise en oeuvre sur la surface de CI (12) séparée comporte une logique de mise hors circuit pour le commutateur principal (5).

3. Arrangement de circuit selon la revendication 1 ou 2, **caractérisé en ce que** le canal (18) a une largeur d'au moins 30 µm, de préférence d'au moins 50 µm.

4. Arrangement de circuit selon l'une des revendications précédentes, **caractérisé en ce que** les parties (6a, 7) de l'électronique de circuit d'attaque (6a, 6b, 7) qui sont disposées des surfaces de CI (11, 12) séparées possèdent des bornes de masse (16, 17) séparées.

5. Arrangement de circuit selon l'une des revendications précédentes, **caractérisé en ce que** les parties (6a, 7) de l'électronique de circuit d'attaque (6a, 6b, 7) qui sont disposées des surfaces de CI (11, 12) séparées possèdent une alimentation électrique séparée.

6. Arrangement de circuit selon la revendication 2, **caractérisé en ce que** la logique de mise hors circuit (6b) du commutateur principal (5) traite un signal de chien de garde (WD) qui est acheminé par une unité à processeur (3).

7. Arrangement de circuit selon la revendication 6, **caractérisé en ce que** le signal de chien de garde (WD) est acheminé par le biais d'une résistance série (14).

8. Arrangement de circuit selon la revendication 2, **caractérisé en ce qu'**une résistance série (15) se trouve dans la ligne d'alimentation de la logique de mise hors circuit (6b).

9. Arrangement de circuit selon l'une des revendications précédentes, **caractérisé en ce qu'**aucune ligne ne passe par le canal (18), à l'exception éventuellement d'une ligne de masse.

10. Vanne, notamment vanne commandée en courant (4a-4n), comprenant un arrangement de circuit selon l'une des revendications précédentes.
